# EUROPEAN PATENT APPLICATION

(11) **EP 4 760 533 A1**
(43) Date of publication of application: **17.06.2026**
(21) Application number: 25211235.4
(22) Date of filing: 27.10.2025
(51) Int. Cl.: G06F 16/3329, G06F 40/35, G06N 3/0475, G06N 5/022, G06F 16/901

(54) **TRACKING DATA LINEAGE OF ANALYTICAL INSIGHTS**

(30) Priority: 16.12.2024 US 202418982281
(71) Applicant: SAP SE, 69190 Walldorf (DE)
(72) Inventor: DOAN HUU, Jacques, 69190 Walldorf (DE)
(74) Representative: Müller-Boré & Partner Patentanwälte PartG mbB

(57) **Abstract**

A system and method include execution of a chatbot session consisting of user queries and chatbot feedbacks, insertion of one of the chatbot feedbacks into an analytics document as analytical insight data, reception of a user selection of one or more of the chatbot feedbacks, generation of a data lineage graph from the selected one or more of the chatbot feedbacks, and storage of the data lineage graph in association with the analytical insight data.

## Description

### BACKGROUND

Modern organizations generate and store vast amounts of data. Users operate analytics applications which provide sophisticated analysis and reporting over such data. Facilitating effective usage of these applications by novice users remains a challenge.

Chatbot applications are known to provide an intuitive interface for submitting queries and receiving responses. Chatbot applications are increasingly used to extract analytical insights from stored data. An extracted insight may be persisted into an analytics document which can be shared among users.

A chatbot application is typically powered by a text generation model (e.g., a trained large language model (LLM)). The responses provided by a chatbot application may be generated from the training corpus of the model, from documents supplied to the model via retrieval-augmented generation (RAG), and/or from structured organizational data acquired via an application programming interface (API). Due to the variety of data sources and the lack of transparency as to how the model generates the response from the data sources, any insights generated by the model may be called into question. Consequently, an organization may hesitate to rely on the insights and any analytics documents which include the insights.

What is needed are systems to efficiently increase user confidence in data insights generated using text generation models.

### BRIEF DESCRIPTION OF THE DRAWINGS

FIG. 1 illustrates a system to track analytical insight data lineages according to some embodiments.
FIG. 2 is a user interface presenting an analytics document and a chatbot session according to some embodiments.
FIG. 3 is a user interface presenting an analytics document and a data lineage according to some embodiments.
FIG. 4 is a flow diagram of a process to generate a data lineage associated with an analytical insight according to some embodiments.
FIG. 5 is a user interface presenting an analytics document and illustrating creation of a data lineage according to some embodiments.
FIG. 6 depicts a data lineage according to some embodiments.
FIG. 7 is a graph of a data lineage according to some embodiments.
FIG. 8 is a diagram of a cloud-based implementation according to some embodiments.

### DETAILED DESCRIPTION

The following description is provided to enable any person in the art to make and use the described embodiments. Various modifications, however, will be readily-apparent to those in the art.

Embodiments relate to analytical insights which are generated using a text generation model and embedded within analytics documents. Generation of such an insight often includes a long and possibly complex chain of user queries and chatbot responses. Embodiments allow a user to select some of the chatbot responses and thoughts of the chain to include in a data lineage associated with the resulting analytical insight. The data lineage specifies the data source of each selected response/thought and is stored in conjunction with the analytical insight.

Upon subsequent access of an analytical document including the analytical insight, a user may retrieve the data lineage to evaluate how the insight was generated and the data sources used therefor. Depending on characteristics of the data sources (e.g., out of date, unknown training source), the user can estimate a level of trust to be associated with the information conveyed by the analytical insight. Embodiments thereby provide increased transparency and trust with respect to model-generated data.

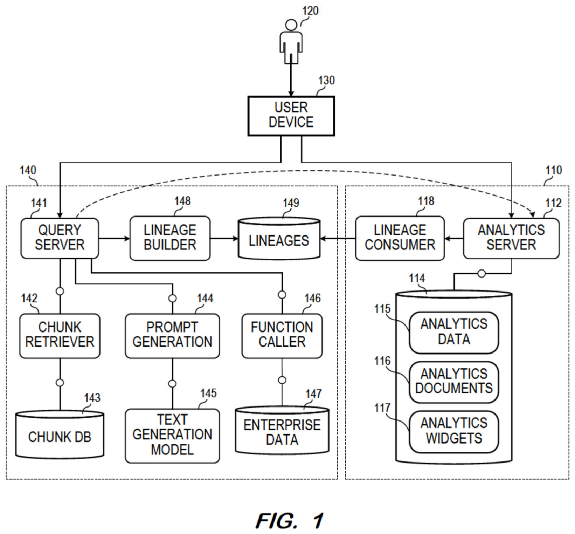

FIG. 1 illustrates a system to track analytical insight data lineages according to some embodiments. Each of the illustrated components may be implemented using any suitable combination of local, on-premise, cloud-based, distributed (e.g., including distributed storage and/or compute nodes) computing hardware and/or software that is or becomes known. Each component described herein may be executed by one or more physical and/or virtualized servers.

Two or more components of FIG. 1 may be co-located. In some embodiments, two or more components are implemented by a single computing device. One or more components may be implemented by a cloud service (e.g., Software-as-a-Service, Platform-as-a-Service). A cloud-based implementation of any components of FIG. 1 may apportion computing resources elastically according to demand, need, price, and/or any other metric. Each component may be executed by an execution environment comprising one or more servers, virtual machines, clusters of a container orchestration system, etc. Such an execution environment may provide an operating system, services, I/O, storage, libraries, frameworks, etc. to applications executing therein.

Analytics system 110 may comprise a backend system for facilitating data analysis. For example, analytics system 110 may comprise a business intelligence system which is intended to generate reports, forecasts, etc. relating to an organization's performance. Analytics system 110 may provide any data analytics functions that are or become known.

User 120 may operate user device 130 to request information from analytics server 112. User device 130 may comprise, for example, a laptop computer, a desktop computer, a smartphone, or a tablet computer. Analytics server 112 may operate to provide user interfaces to user device 130 for requesting information and presenting corresponding data visualizations. According to some embodiments, user device 130 executes a Web browser which accesses Web pages provided by analytics server 112. Such a Web browser may execute a front-end application corresponding to a back-end application of analytics server 112.

Although only one user 120 and one user device 130 are illustrated, analytics system 110 may service any number of users, each of whom may operate one or more user devices. Moreover, analytics system 110 may comprise a multi-tenant system which simultaneously serves users of multiple tenants based on their respective tenant's data.

Analytics server 112 may retrieve information from data store 114 in response to received requests. Data store 114 includes analytics data 115, analytics documents 116 and analytics widgets 117. Data store 114 may any type of query-responsive database, data warehouse, object store, or other storage system that is or becomes known. Data store 114 may be implemented using one or more storage systems, each of which may be standalone or distributed, on-premise or cloud-based. Data store 114 may comprise a database management system (not shown) for communication therewith and management thereof as is known in the art.

Analytics data 115 may comprise tabular data stored in a columnar or row-based format, object data or any other type of data that is or becomes known. Analytics data 1115 may also include metadata which describes the structure and interrelationships (i.e., the schema) of the data. The data may comprise sales data, product data, location data, customer data, etc. but embodiments are not limited to any particular type of data. The schema of analytics data 115 may comprise OnLine Analytical Processing (OLAP) cubes.

Analytics documents 116 may comprise collections of disparate but possibly related information. In one example, an analytics document 116 is a report created by a user which includes text, data, and data visualizations (e.g., charts, tables) and which is related to a particular theme (e.g., Sales in EMEA). The data may be raw data from analytics data 115 and/or data (e.g., forecast data) which is calculated therefrom.

An analytics document 116 may comprise one or more analytics widgets 117. An analytics widget 117 may comprise data and/or visualizations created by a user and stored in a format which may be reused among one or more documents 116. In some embodiments, data values presented by an analytics widget 117 change in response to changes to underlying analytics data 115. Analytics server 112 may also provide functionality to assist users in creating, storing and editing analytics documents 116 and analytics widgets 117.

An analytics widget 117 may include analytical insight data associated with a data lineage. Lineage consumer 118 of system 110 may retrieve data lineages associated with analytical insight data from chatbot system 140 for display to a user. Chatbot system 140 may generate the analytical insight data and the associated data lineage as will be described below.

Query server 141 may comprise a chatbot application in some embodiments. User 120 operates user device 130 to submit queries to query server 141. The queries may be intended to generate analytical insight data to be included in an analytics document 116.

Upon receiving a user query, query server 141 calls chunk retriever 124 to request text chunks which are semantically similar to the query. Chunk retriever 142 performs a similarity search to identify these text chunks from within chunk database 143. Chunk database 143 may comprise a vector database populated based on text taken from documents (e.g., pdf, text) as is known in the art. The documents may be related to the domain in which analytics system 110 and query system 140 are being used.

The documents are broken down into text portions, or "chunks" using any chunking algorithm that is or becomes known. Each chunk is converted to a multi-dimensional numerical vector (i.e., an embedding) which is intended to capture the semantic and syntactic meaning of the chunk. The conversion is performed such that multi-dimensional vectors of semantically-similar chunks are close to one another in vector space, and multi-dimensional vectors of semantically-dissimilar chunks are far from one another in vector space.

Chunk database 143 stores each chunk in association with the multi-dimensional vector which was generated therefrom. Accordingly, chunk retriever 142 converts a received query to a multi-dimensional vector, identifies vectors of database 143 which are closest to the multi-dimensional vector (e.g., using a Cosine similarity measure), and retrieves the text chunks which are stored in database 143 association with the identified vectors.

Query server 141 passes the text chunks to prompt generation component 144. Prompt generation component 144 generates a prompt (e.g., consisting of a system prompt and a user prompt) which includes the query and includes the text chunks as context to the query. The context of the prompt may also include descriptions of functions which may be called to retrieve data from a system. In some embodiments, the prompt context also instructs model 145 to describe its intermediate reasoning steps (i.e., to provide thoughts of a chain-of-thoughts) in its response to the prompt.

The prompt is transmitted to text generation model 145, which comprises a neural network trained on a large general-purpose text corpus to generate text based on input text. Embodiments may implement a generative model which generates any type of data based on an input prompt, including but not limited to image, video and audio data.

According to some embodiments, model 145 is a Large Language Model (LLM) conforming to a transformer architecture. Non-exhaustive examples of an LLM include GPT-4, LaMDA, Claude or the like. A transformer architecture may include, for example, embedding layers, feedforward layers, recurrent layers, and attention layers. An embedding layer creates embeddings from input text, intended to capture the semantic and syntactic meaning of the input text. A feedforward layer is composed of multiple fully-connected layers that transform the embeddings. Some feedforward layers are designed to generate representations of the intent of the text input. A recurrent layer interprets the tokens (e.g., words) of the input text in sequence to capture the relationships between the tokens. Attention layers may employ self-attention mechanisms which are capable of considering different parts of input text and/or the entire context of the input text to generate output text. Generally, each layer includes nodes which are connected to the input of nodes of a subsequent layer to form a directed and weighted graph. Each node receives input, changes its internal state according to that input, and produces an output depending on the input and internal state.

Text generation model 145 may be implemented by, for example, executable program code, a set of hyperparameters defining a model structure and a set of corresponding weights, or any other representation of an input-to-output mapping which was learned as a result of the training. Model 145 may be publicly available or deployed within a trusted landscape. Similarly, text generation model 145 may be trained based on public and/or private data.

Model 145 operates based on its training to generate a response as instructed by the prompt. The response is returned to query server 141. The response may include a function name (e.g., an API) and argument values which are intended to retrieve data for supplementing the response. If so, query server 141 passes the function name and argument values to function caller 146 to call enterprise data source 147 using the function name and argument values.

Enterprise data source 147 may comprise any suitable data store. Enterprise data store 147 may return structured data (i.e., data corresponding to a schema) to function caller 146 in response to the call. Enterprise data source 147 may store data from which analytics data 115 is generated. For example, enterprise data source 147 may comprise an OnLine Transaction Processing (OLTP) data source from which analytics data 115 is extracted, transformed and loaded.

Query server 141 provides a response to user device 130 based on the response received from model 145 and data retrieved from enterprise data 147, if any. The foregoing process may be repeated several times within a single chatbot session until the response from query server 141 includes analytical insight data which is desired by user 120. User 120 may operate user device 130 to copy the analytical insight data to analytics server 112 as illustrated by the dashed arrow of FIG. 1.

User 120 may also operate user device 115 to select one or more chatbot responses or thoughts (i.e., chatbot feedback) from the chatbot session. Lineage builder 148 generates a data lineage graph from the selected chatbot feedbacks and stores the data lineage graph in association with the analytical insight data in lineages store 149. The data lineage graph may specify the selected chatbot feedbacks, the data source (e.g., database 143, model 145, data 147) of each selected chatbot feedback and metadata describing the data sources. The data lineage graph may also include annotations and specify relationships between the selected chatbot feedbacks.

After copying the analytical insight data to analytics server 112, user 120 may include the analytical insight data into a document 116 or a widget 117 included within a document. In some embodiments, the copy operation creates a widget 117 including the analytical insight data and embeds the widget in a currently-viewed document 116. When another user (or the same user) views the document in the future, the user may instruct analytics server 112 to retrieve the associated data lineage graph from lineages 149 via lineage consumer 118 and display the retrieved data lineage graph to the user.

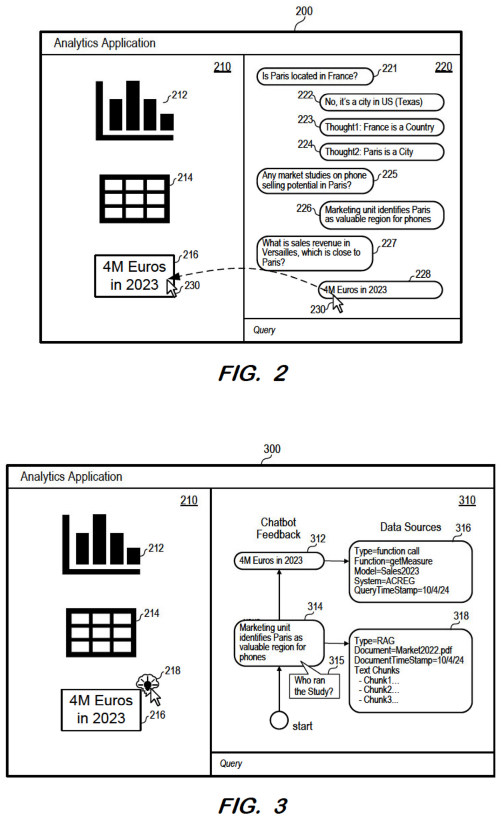

FIG. 2 depicts user interface 200 of an analytics application according to some embodiments. Interface 200 may be provided by analytics server 112 to user device 130 in some examples. Interface 200 shows analytics document 210 showing data visualizations 212 and 214 generated by server 112 based on user input as is known in the art. Interface 200 also shows chatbot session 220. Chatbot session 220 may be managed by a chatbot system separate from the analytics system which manages analytics document 210, but embodiments are not limited thereto.

Chatbot session 220 includes user queries 221, 225 and 227 and respective chatbot responses 222, 226 and 228. Response 222 was generated by prompting a text generation model based on user query 221 and an instruction to return each thought of a chain-of-thoughts produced during generation of the response. Accordingly, chatbot session 220 also includes thoughts 223 and 224 associated with response 222. In the present example, response 228 includes analytical insight data which the user wishes to include in analytics document 210. Accordingly, the user operates cursor 230 to select and drag the analytical insight data of response 228 into document 210 as illustrated. This operation generates widget 216 including the analytical insight data, and associates widget 216 with document 210.

As will be described below, a data lineage graph may be created based on the responses and thoughts of chatbot session 220. Such a data lineage graph is stored in association with widget 216 so it may be accessed by subsequent viewers of widget 216.

FIG. 3 depicts user interface 300 presenting an analytics document 210 and data lineage 310 according to some embodiments. Interface 300 may be presented to any user accessing document 210, including but not limited to the user who created document 210. Icon 218 is presented adjacent to widget 216 of document 210. Data lineage 310 is displayed in response to selection of icon 218.

In the illustrated example, data lineage 310 is generated based on a stored data lineage graph associated with widget 216. Data lineage 310 includes selected chatbot responses 312 and 314 of chatbot session 220 and comment 315 added by a user as will be described below. Data lineage 310 also includes metadata 316 and 318 corresponding to each of responses 312 and 314. Each of metadata 316 and 318 describes a data source from which its corresponding response 312 and 314 was generated. The metadata may comprise information which can be used to evaluate the reliability of a response which was generated therefrom.

For example, data source metadata 316 indicates that response 312 was retrieved using a functional call to the Sales2023 model of system ACREG. Metadata 316 also provides a timestamp of the function call so that a viewer of data lineage 310 can determine a timeliness/reliability of the data of response 312. Similarly, metadata 318 indicates that response 314 was generated using RAG. Metadata 318 also specifies text chunks included in the RAG prompt and a document from which the text chunks were produced.

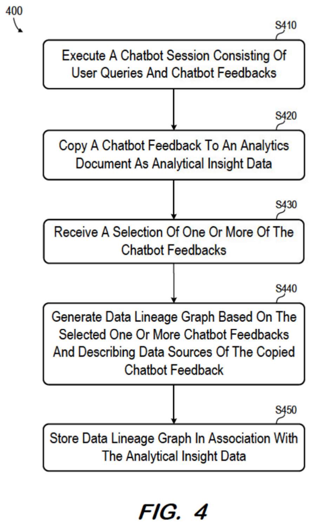

FIG. 4 is a flow diagram of process 400 to generate a data lineage associated with an analytical insight according to some embodiments. Process 400 and the other processes described herein may be performed using any suitable combination of hardware and software. Software program code embodying these processes may be stored by any non-transitory tangible medium, including a fixed disk, a volatile or nonvolatile random-access memory, a DVD, a Flash drive, or a magnetic tape, and executed by any number of processing units, including but not limited to processors, processor cores, and processor threads. Such processors, processor cores, and processor threads may be implemented by a virtual machine provisioned in a cloud-based architecture. Embodiments are not limited to the examples described below.

A chatbot session is executed at S410. The chatbot session includes user queries and chatbot feedback consisting of respective chatbot responses and thoughts. The chatbot session may be initiated and executed as described above with respect to FIG. 2. In particular, the chatbot responses may be derived from the general training corpus of a text generation model, from a domain-specific RAG text corpus, and/or from a function call to a data source.

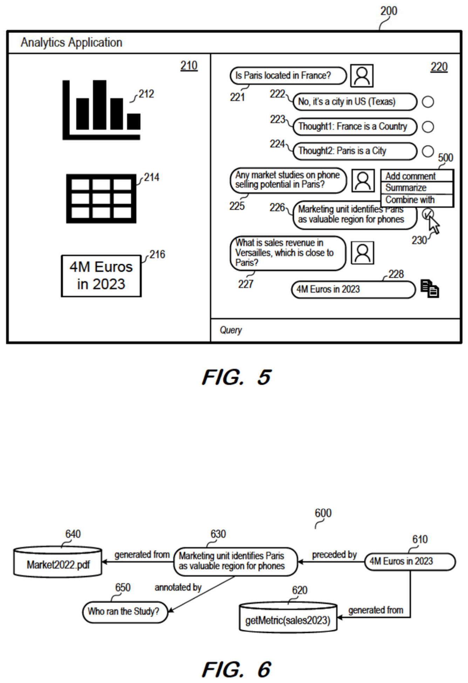

One of the chatbot feedbacks of the chatbot session is copied to an analytics document as analytical insight data at S420. For example, as described with respect to FIG. 2, the user of the chatbot session may operate control 230 to select and drag chatbot response 228 into analytics document 210 at S420. According to some embodiments, copying chatbot feedback at S420 causes the chatbot session to enter an edit mode as illustrated in FIG. 5. The edit mode allows user selection of one or more of the chatbot feedbacks in order to begin generation of data lineage graph. The edit mode may be managed by lineage builder 148 of chatbot system 140.

In the present example of the edit mode, a selection icon is displayed adjacent to each of chatbot feedbacks 222, 223, 224 and 226 which precede copied feedback 228. Cursor 230 is used to select the icon adjacent to feedback 226, and context menu 500 is presented in response to the selection. Context menu 500 presents three selectable options, but embodiments are not limited thereto.

Selection of the "Add comment" option may invoke an input window into which the user may input a comment associated with the selected feedback. As will be described below, such a comment will be associated with the feedback in a data lineage graph. Selection of the "Summarize" option causes generation of a summary of the selected feedback. The summary may be generated by submitting the selected feedback to a text generation model with a prompt instructing the text generation model to summarize the feedback. The "Summarize" option may be useful in a case that the selected chatbot feedback is unnecessarily verbose.

The "Combine with" option may prompt the user to select an additional one or more chatbot feedbacks. The additional one or more feedbacks are combined with the originally-selected chatbot feedback into a single node of a data lineage graph. The "Combine with" option may be useful to compress the data lineage graph. Context menu 500 is presented in response to each chatbot feedback selected at S430.

Next, at S440, a data lineage graph is generated based on the one or more chatbot feedbacks selected at S430. The data lineage graph may include nodes and relationships between the nodes. The nodes are associated with source types, and each source type is associated with related attributes. FIG. 6 depicts data lineage graph 600 according to some embodiments. Graph 600 represents the selected chatbot feedback of chatbot session 220. Graph 600 includes node 610 representing chatbot response 228 including the copied analytical insight data and node 620 representing the function call from which chatbot response 228 was generated. Node 630 represents chatbot response 228 and is related to node 610 via a "preceded by" attribute. Node 630 is also related to node 640 representing a text document from which chatbot response 226 was generated. It is also assumed that the user selected the "Add comment" option after selecting chatbot response 226 to annotated node 630 with node 650 representing the added comment.

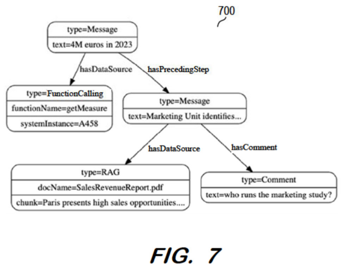

FIG. 7 illustrates data lineage graph 700 according to some embodiments. Data lineage graph 700 may also be generated based on chatbot session 220 and the chatbot feedbacks selected at S430. According to the schema of graph 700, node source types may comprise Message, LLM, Thought, RAG, FunctionCalling, and Comment. According to some embodiments, the attribute of the Message source type is text, the attributes of the LLM source type are model name, release date, model size, and training number of tokens, the attributes of the Thought source type are text and ordinal, the attributes of the RAG source type are text chunk and document name (i.e., the document from which the text chunk was extracted), the attributes of the FunctionCalling source type are function name, system instance id, and argument values, and the attributes of the Comment source type are text and publish date. The relationships between nodes are also associated with attributes, e.g., hasThought, hasDataSource, hasPrecedingStep, and hasComment.

After generating the graph at S440, lineage builder 148 stores the data lineage graph in lineages 149 in association with the analytical insight data at S450. For example, lineages 149 may comprise a graph database which facilitates storage of graphs. The generated graph may be stored in lineages 149 in association with an identifier of the analytical insight data or an identifier of a widget 117 created to include the analytical insight data, for example. Accordingly, while presenting a document 116 including the analytical insight data or the widget, analytics server 112 may instruct lineage consumer 118 to retrieve the stored data lineage graph from lineages 149 using the associated identifier and may display the retrieved data lineage graph as depicted in FIG. 3.

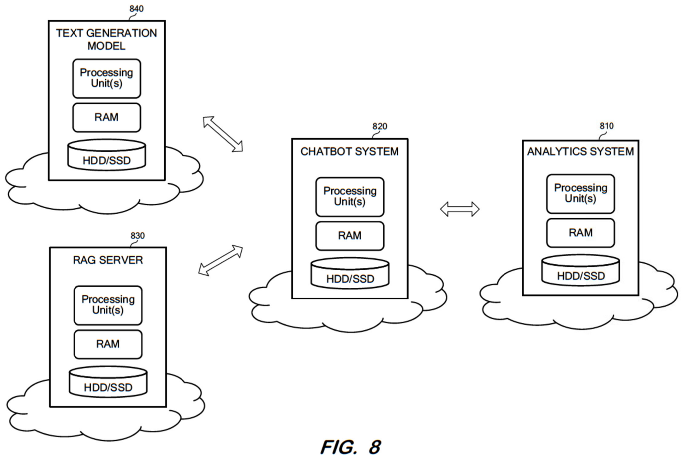

FIG. 8 is a diagram of a cloud-based implementation according to some embodiments. Each of systems 810 through 840 may comprise cloud-based resources residing in one or more public clouds providing self-service and immediate provisioning, autoscaling, security, compliance and identity management features. Each of systems 810 through 840 may comprise servers or virtual machines of respective Kubernetes clusters, but embodiments are not limited thereto.

A user (not shown) may operate analytics system 810 to generate an analytics document based on analytics data. Analytics server 810 may leverage chatbot system 820 to allow the user to generate analytical insight data for inclusion in an analytics document as described above. Generation of the analytical insight data may include calling RAG server 830 to identify text chunks similar to a received user query and prompting text generation model 840 based on the user query and the text chunks. As also described above, chatbot system 820 may call a structured data store based on a response received from model 840 to retrieve data for responding to the user query.

Chatbot system 820 may also generate a data lineage graph based on the generation of analytical insight data. The data lineage graph may be generated based on user-selected chatbot responses and/or thoughts and may indicate a data source of each selected response/thought. The graph may be annotated with comments, and more than one selected response/thought may be represented by a single node of the graph. In some embodiments, and in response to a user instruction, chatbot system 820 may prompt text generation model 840 to summarize one of the selected responses/thoughts and include the summary in a graph node which represents the summarized one of the selected responses/thoughts.

The data lineage graph may be stored in association with the analytical insight data. Accordingly, when analytics system 810 displays the analytical insight data (e.g., in an analytics document retrieved by a user), the corresponding data lineage graph may be retrieved and presented to the user. The presented data lineage graph allows the user to efficiently evaluate the sources of the analytical insight data and their reliability.

The foregoing diagrams represent logical architectures for describing processes according to some embodiments, and actual implementations may include more, or different components arranged in other manners. Other topologies may be used in conjunction with other embodiments. Moreover, each component or device described herein may be implemented by any number of devices in communication via any number of other public and/or private networks. Two or more of such computing devices may be located remote from one another and may communicate with one another via any known manner of networks and/or a dedicated connection. Each component or device may comprise any number of hardware and/or software elements suitable to provide the functions described herein as well as any other functions. For example, any computing device used in an implementation of a system according to some embodiments may include a processor to execute program code such that the computing device operates as described herein.

All systems and processes discussed herein may be embodied in program code stored on one or more non-transitory computer-readable recording media. Such media may include, for example, a hard disk, a DVD-ROM, a Flash drive, magnetic tape, and solid-state Random Access Memory (RAM) or Read Only Memory (ROM) storage units. Embodiments are therefore not limited to any specific combination of hardware and software.

Embodiments described herein are solely for the purpose of illustration. Those in the art will recognize other embodiments may be practiced with modifications and alterations to that described above.

## Claims

1. A method comprising:
executing a chatbot session consisting of user queries and chatbot feedbacks;
inserting one of the chatbot feedbacks into an analytics document as analytical insight data;
receiving a user selection of one or more of the chatbot feedbacks;
generating a data lineage graph from the selected one or more of the chatbot feedbacks; and
storing the data lineage graph in association with the analytical insight data.

2. A method according to Claim 1, wherein the data lineage graph includes a source type for each data source of the selected one or more of the chatbot feedbacks; and/or
wherein the chatbot feedbacks comprise at least one chatbot message and at least one thought of a chain-of-thoughts.

3. A method according to Claim 1 or 2, wherein receiving a user selection of one or more of the chatbot feedbacks comprises:
receiving a user comment associated with one of the one or more of the chatbot feedbacks, and
wherein generating the data lineage graph comprises creating a first node associated with the one of the one or more of the chatbot feedbacks, creating a second node associated with the comment, and creating an edge connecting the first node and the second node.

4. A method according to any one of the preceding claims, wherein receiving a user selection of one or more of the chatbot feedbacks comprises receiving an instruction to summarize one of the one or more of the chatbot feedbacks, the method further comprising:
instructing a text generation model to generate a text summary of the one of the one or more of the chatbot feedbacks,
wherein generating the data lineage graph comprises creating a first node associated with the text summary; and/or
wherein receiving a user selection of one or more of the chatbot feedbacks comprises receiving an instruction to combine two or more of the chatbot feedbacks, the method further comprising:
instructing a text generation model to generate a text summary of the two or more of the chatbot feedbacks,
wherein generating the data lineage graph comprises creating a first node associated with the text summary.

5. A method according to any one of the preceding claims, further comprising:
receiving a request to view the analytics document;
determining that the analytical insight data is associated with the analytics document;
determining that the data lineage graph is associated with the analytical insight data; and
presenting the analytics document and the data lineage graph.

6. A system comprising:
a memory storing executable program code; and
at least one processing unit to execute the program code to cause the system to perform operations comprising:
executing a chatbot session including user queries and chatbot feedbacks;
receiving a user selection of one of the chatbot feedbacks as analytical insight data;
receiving a user selection of one or more of the chatbot feedbacks;
generating a data lineage graph based on the selected one or more of the chatbot feedbacks; and
storing the data lineage graph in association with the analytical insight data.

7. A system according to Claim 6, wherein the data lineage graph includes a source type for each data source of the selected one or more of the chatbot feedbacks; and/or
wherein the chatbot feedbacks comprise at least one chatbot message and at least one thought of a chain-of-thoughts.

8. A system according to Claim 6 or 7, wherein receiving a user selection of one or more of the chatbot feedbacks comprises:
receiving a user comment associated with one of the one or more of the chatbot feedbacks, and
wherein generating the data lineage graph comprises creating a first node associated with the one of the one or more of the chatbot feedbacks, creating a second node associated with the comment, and creating an edge connecting the first node and the second node.

9. A system according to any one of Claims 6 to 8, wherein receiving a user selection of one or more of the chatbot feedbacks comprises receiving an instruction to summarize one of the one or more of the chatbot feedbacks, the at least one processing unit to execute the program code to cause the system to perform operations comprising:
instructing a text generation model to generate a text summary of the one of the one or more of the chatbot feedbacks,
wherein generating the data lineage graph comprises creating a first node associated with the text summary; and/or
wherein receiving a user selection of one or more of the chatbot feedbacks comprises receiving an instruction to combine two or more of the chatbot feedbacks, the at least one processing unit to execute the program code to cause the system to perform operations comprising:
instructing a text generation model to generate a text summary of the two or more of the chatbot feedbacks,
wherein generating the data lineage graph comprises creating a first node associated with the text summary.

10. A system according to any one of Claims 6 to 9, the at least one processing unit to execute the program code to cause the system to perform operations comprising:
receiving a request to view an analytics document;
determining that the analytical insight data is associated with the analytics document;
determining that the data lineage graph is associated with the analytical insight data; and
presenting the analytics document and the data lineage graph.

11. One or more non-transitory computer-readable recording media storing program code, the program code executable by at least one processing unit of a computing system to cause the computing system to perform operations comprising:
executing a chatbot session including user queries and chatbot feedbacks;
receiving a user selection of one of the chatbot feedbacks as analytical insight data;
receiving a user selection of one or more of the chatbot feedbacks;
generating a data lineage graph based on the selected one or more of the chatbot feedbacks; and
storing the data lineage graph in association with the analytical insight data.

12. A medium according to Claim 11, wherein the data lineage graph includes a source type for each data source of the selected one or more of the chatbot feedbacks.

13. A medium according to Claim 11 or 12, wherein receiving a user selection of one or more of the chatbot feedbacks comprises:
receiving a user comment associated with one of the one or more of the chatbot feedbacks, and
wherein generating the data lineage graph comprises creating a first node associated with the one of the one or more of the chatbot feedbacks, creating a second node associated with the comment, and creating an edge connecting the first node and the second node.

14. A medium according to any one of Claims 11 to 13, wherein receiving a user selection of one or more of the chatbot feedbacks comprises receiving an instruction to summarize one of the one or more of the chatbot feedbacks, the program code executable by at least one processing unit of a computing system to cause the computing system to perform operations comprising:
instructing a text generation model to generate a text summary of the one of the one or more of the chatbot feedbacks,
wherein generating the data lineage graph comprises creating a first node associated with the text summary; and/or
wherein receiving a user selection of one or more of the chatbot feedbacks comprises receiving an instruction to combine two or more of the chatbot feedbacks, the program code executable by at least one processing unit of a computing system to cause the computing system to perform operations comprising:
instructing a text generation model to generate a text summary of the two or more of the chatbot feedbacks,
wherein generating the data lineage graph comprises creating a first node associated with the text summary.

15. A medium according to any one of Claims 11 to 14, the program code executable by at least one processing unit of a computing system to cause the computing system to perform operations comprising:
receiving a request to view an analytics document;
determining that the analytical insight data is associated with the analytics document;
determining that the data lineage graph is associated with the analytical insight data; and
presenting the analytics document and the data lineage graph.
